# EUROPEAN PATENT APPLICATION

(11) **EP 4 091 452 A1**
(43) Date of publication of application: **23.11.2022**
(21) Application number: 21174089.9
(22) Date of filing: 17.05.2021
(51) Int. Cl.: A01N 63/20, A01P 1/00, A01P 3/00, A01N 43/08, A01N 37/36, A01N 37/40, A01N 37/02

(54) **DISINFECTION COMPOSITION**

(71) Applicant: Zobele Holding S.P.A., 38123 Trento (IT)
(72) Inventor: CHEPTENE, Victoria, 38123 TRENTO (IT); OLIVA, Marco, 38123 TRENTO (IT); RIERA GINER, Montserrat, 08019 BARCELONA (ES); GARCIA SUBIRATS, Maria, 08019 BARCELONA (ES)
(74) Representative: Herrero & Asociados, S.L.

(57) **Abstract**

The present invention relates to a disinfection composition and a process for disinfection hard surface. This invention is especially useful for remove bacteria and virus.

## Description

The present invention relates to a disinfection composition and a process for disinfection hard surface. This invention is especially useful for remove bacteria and virus.

### BACKGROUND ART

For half a century, people mainly used only harsh chemicals to disinfect and clean their houses and especially hard surfaces.

Several hazardous substances are frequently used in cleaning products and more and more studies have identified cleaners as a group at risk for adverse health effects of the skin and the respiratory tract. Up to 75% of cleaning products contain irritant, 64% harmful and 28% corrosive labelled substances. Hazards for eyes (59%) and skin (50%), and hazards by ingestion (60%) are the most reported. With the long-term unreasonable use of these chemical disinfectants, environmental pollution has become more serious and the ecological balance is under threat.

In addition, due to the continuous emergence of drug-resistant bacteria and pests, the control efficiency of chemical disinfectants has gradually declined, and more and more highly toxic chemical disinfectants are used. The continuous increase in usage and frequency of use has gradually increased the residual amount of chemical disinfectants, posing greater harm to human and environmental safety.

Moreover, chemical or enzymatic cleaners work only at the beginning, but have no mechanism to provide long term effectiveness.

On example is described in the patent application US10834922, wherein a disinfectant formulation is defined, the disinfectant formulation is used to treat a surface, the formulation comprises an oxazoline homopolymer and a carrier.
On the other hand, the so-called probiotic-based cleaners can provide a good action against harmful microorganism but do not guarantee an immediate disinfection that is usually needed and the clean effect that the chemical cleaners can provide thanks to the surfactants.

Thus, from what is known in the art, it is derived that the development of a long-lasting disinfection composition and no harmful for human is still of great interest.

### SUMMARY OF THE INVENTION

Inventors have found that the combination of organic acids and probiotics ensure an immediate bactericide and virucide effect and a long-lasting disinfection and thus the invention relates to stabilized probiotic compositions combined with organic acid and also to methods for applying the compositions for hard surface disinfection and cleaning.

Combining one organic acids with bacterial spores have two effects from one side guarantees immediate disinfection due to the adverse acidic environment created by the acid compound and afterwards a long-lasting protection provided by the bacterial spores. The organic acid kills immediately the bad bacteria, fungi and viruses and in long time period *Bacillus* spores develop and colonize the surfaces creating a protective bio-film that ensures no proliferation of bad bacteria.

An essential feature is that the pKa of the organic acid is lower or equal than 5 measured by potentiometry at 25°C used water as solvent.

Therefore, the first aspect of the invention refers to a disinfection composition for surface, comprising: *Bacillus* spores suspended in water and an organic acid with a pKa lower or equal than 5 or a mixture of the organic acid and a salt of the organic acid.

By lowering the pH of the surface to clean with the organic acid it would make it easier for *Bacillus* spores to recolonize the area. The aim of the present invention is to provide a more efficient composition for the disinfection of hard surface. The combination of the organic acid and Bacillus spore in a single composition gives rise to unexpected synergy effects, since it lowers the pH, has a bactericide and viricide action and inhibits the growth of harmful microorganisms.

Another aspect of the present invention is the method of disinfecting a surface wherein the method comprises the step of applying the composition defined in the first aspect of the present invention to a surface.

The composition shows an antimicrobial activity on the surface applied. This antimicrobial activity meant a bacteriostatic, fungistatic, bactericidal and/or fungicidal activity, i.e. the ability to retard the growth of and kill certain bacteria and fungi, respectively.

### DETAILED DESCRIPTION OF THE INVENTION

As mentioned above, an aspect of the present invention relates to a disinfection composition for surface, comprising: *Bacillus* spores suspended in water and an organic acid with a pKa lower or equal than 5 or a mixture of the organic acid and a salt of the organic acid.

In a preferred embodiment the bacillus spores is selected from the bacillus species: *Bacillus amyloliquefaciens,Bacillus licheniformis, Bacillus megaterium, Bacillus Pumilus,Bacillus subtilis, Bacillus velezensis, Bacilus thurigensis*.The most preferred is a *Bacillus subtilis* spores.

In a preferred embodiment the concentration of the Bacillus spores is in the range from 10³ cfu/ml to 10⁸ cfu/ml. More preferably in the range from 10⁶ cfu/ml to 10⁸ cfu/ml and the concentration in weight of the organic acid and /or the salt of the organic acid is in the range from 1% to 10% by weight, more preferably from 0,1% to 4% by weight.

In a preferred embodiment the composition further comprises a mixture of organic acids with a pKa lower or equal than 5 preferably two, three or four.

In a preferred embodiment the organic acid is selected from: lactic acid, acetic acid, butyric acid, ascorbic acid, salicylic acid, or mixtures thereof. Still in a more preferred embodiment the weight concentration of the organic acid or mixture is in a range from 0,01% to 3% by weight.

In a preferred embodiment the composition presents a pH between 3.0 and 4.5. This pH has been shown to be particularly advantageous; the pH is advantageously not so low that the acid irritates the human tissues.

An improvement of the above described composition could be the addition of a preservative, a surfactant, a fragrance, an emulsifier, and/or a thickener of that improve cleaning and disinfection process.

Therefore, in a preferred embodiment the composition further comprises: a preservative, a surfactant, a fragrance, an emulsifier, and/or a thickener. In a more preferred embodiment further comprises in weight concentration:
a preservative in a range from 0,01% to 4% by weight, more preferably in a range from 0,5% to 1,5% by weight;
a surfactant in a range from 0,01% to 6% by weight, more preferably in a range from 0,5% to 2% by weight;
an emulsifier in a range from 0,01% to 1,5% by weight
a thickener from 0,001 % to 3% by weight, more preferably in a range from 0,001 % to 3% by weight;
   and/or
a fragrance from 0,01% to 3% by weight.

The balance of each composition is done by water amount.

In a particular embodiment the preservative is sodium benzoate.

In a preferred embodiment the surfactant is selected from sodium lauryl sulphate, alkyl polyglucoside or mono and di cocoate glycerides, the thickener is selected from: xanthan gum, acacia gum, arabic gum, agar agar gum and/or guar gum and the emulsifier is castor oil ethoxylate.

Another aspect of the present invention is the method of disinfecting a surface wherein the method comprises the step of applying the composition defined in the first embodiment of the present invention to a surface.

The composition could be applied in different ways, for example trough a pump spray trigger or an aerosol system. Both these systems, but there are not excluded other ways of application, could ensure a reasonable spread of the formulation and thus an efficient disinfectant and cleaning effect.

### EXAMPLE

In the Table 1 is showed compositions of the invention

**Table 1**

| | | Compositions | | | | | | | | |
|---|---|---|---|---|---|---|---|---|---|---|
| | | 1 | 2 | 3 | 4 | 5 | 6 | 7 | 8 | 9 |
| Spores | *Bacillus strains* | 10⁶ cfu | 10⁷ cfu | 10⁸ cfu | 10⁶ cfu | 10⁶ cfu | 10⁷ cfu | 10⁷ cfu | 10⁷ cfu | 10⁸ cfu |
| | Lactic acid | 0,5 | 1 | 1,5 | 0,1 | 0,5 | 1,85 | 2 | 3 | 4 |
| | Sodium lactate | 0 | 0,5 | 0,75 | 1 | 1 | 0 | 0 | 0 | 3 |
| | Citric acid | 0,5 | 0 | 0,75 | 1 | 2 | 1 | 0 | 3 | 0 |
| | Salicylic acid | 0,75 | 0,5 | 0 | 1 | 0 | 2 | 3 | 0 | 0 |
| Surfactant | Sodium lauryl sulfate | 0 | 0 | 0 | 1 | 1 | 1 | 2 | 3 | 4 |
| | Alkyl polyglycoside | 0,5 | 0,5 | 0 | 1 | 0 | 3 | 2 | 1 | 0 |
| | Mono and di cocoate glycerides | 0 | 1 | 1 | 2 | 3 | 0 | 0 | 0 | 0 |
| Fragance | | 0,1 | 0,95 | 1 | 0,1 | 0,3 | 0,5 | 0,7 | 0,9 | 1 |
| Preservative | Sodium benzoate | 0,5 | 1 | 0,75 | 0,1 | 0,5 | 1,85 | 2 | 3 | 4 |
| Thickener | Xanthan gum | 0 | 0,005 | 0,01 | 0,001 | 0 | 0,05 | 0,5 | 0 | 1 |
| | Guar Gum | 0,001 | 0 | 0,05 | 0 | 0,001 | 0,10 | 0,5 | 1 | 0 |
| Emulsifier | Castor oil ethoxylate | 0,5 | 1,0 | 1,5 | 0,1 | 0,25 | 0,5 | 0,75 | 1 | 1,5 |
| Purified water | | 97 | 93 | 92 | 92 | 91 | 87 | 87 | 84 | 81 |

## Claims

1. A disinfection composition for surface, comprising: *Bacillus* spores suspended in water and an organic acid with a pKa lower or equal than 5 or a mixture of the organic acid and a salt of the organic acid.

2. The disinfection composition according claim 1 wherein the concentration of the Bacillus strain is in the range from 10³ cfu/ml to 10⁸ cfu/ml.

3. The disinfection composition according any of the claims 1 to 2 the concentration in weight of the organic acid is in the range from 0,1% to 4% by weight.

4. The disinfection composition according any of the claims 1 to 3 wherein the composition comprises a mixture of two organic acid with a pKa lower or equal than 5.

5. The disinfection composition according claim 4 wherein the organic acid is selected from: lactic acid, acetic acid, butyric acid, ascorbic acid, salicylic acid, or mixtures thereof.

6. The disinfection composition according claim 4 or 5 wherein the weight concentration of the organic acid is in a range from 0,01% to 3% by weight.

7. The disinfection composition according any of the claims 1 to 6 wherein further comprises: a preservative, a surfactant, a fragrance, an emulsifier, and/or a thickener.

8. The disinfection composition according any of the claims 1 to 7 wherein further comprises in weight concentration:
a preservative in a range from 0,01% to 4% by weight;
a surfactant in a range from 0,01% to 6% by weight;
an emulsifier in a range from 0,01% to 1,5% by weight;
a thickener from 0,001 % to 1 % by weight and/or
a fragrance from 0,01% to 3% by weight.

9. The disinfection composition according claim 7 or 8 wherein the preservative is sodium benzoate.

10. The disinfection composition according claim 7, 8 or 9 wherein the surfactant is selected from sodium lauryl sulphate or alkyl polyglucoside and the emulsifier is castor oil ethoxylate.

11. A method of disinfecting a surface wherein the method comprises the step of applying the composition defined in any of the claims 1 to 10 to a solid surface.
